# FASCICULE DE BREVET EUROPEEN

(11) **EP 4 037 930 B1**
(45) Date de publication et mention de la délivrance du brevet: **02.08.2023**
(21) Numéro de dépôt: 20771301.7
(22) Date de dépôt: 15.09.2020
(51) Int. Cl.: B60N 2/01, B60N 2/02, B60N 2/20, B60N 2/30, B60N 2/68

(54) **BANQUETTE DE VEHICULE**
FAHRZEUGSITZBANK
VEHICLE BENCH SEAT

(30) Priorité: 03.10.2019 FR 1910958
(43) Date de publication de la demande: 10.08.2022
(73) Titulaire: Renault S.A.S., 92100 Boulogne-Billancourt (FR)
(72) Inventeur: CAFFARI, Serge, 78290 CROISSY SUR SEINE (FR); EL-MHARD, Lahcen, 78370 PLAISIR (FR); MORO, Fabrice, 92140 CLAMART (FR)
(74) Mandataire: Renault Group
(86) Numéro de dépôt international: PCT/EP2020/075676
(87) Numéro de publication internationale: WO 2021/063665

(56) Documents cités:
- WO-A1-2014/111479
- DE-A1-102007 044 096
- DE-B3-102013 003 788
- DE-B4-102007 044 096

## Description

### L'invention se rapporte à une banquette de véhicule

Il est supposé qu'une telle banquette comprend conventionnellement une assise et un dossier.

Afin de bien comprendre le positionnement des différentes pièces impliquées dans la banquette, la description est réalisée comme si la banquette était montée dans un véhicule, en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Certains véhicules automobiles comportent une banquette arrière définissant trois places et qui est transformable en deux sièges confortables, au moyen d'un rabattement d'un accoudoir central. En effet, pour une banquette placée dans une configuration à trois places, l'accoudoir est rentré dans le dossier de la banquette, et lorsque ladite banquette se transforme en deux sièges confortables, l'accoudoir a pivoté vers l'avant jusqu'à venir s'étendre parallèlement à l'assise. De cette manière, la banquette trois places se convertit en deux sièges spacieux, séparés par l'accoudoir central rabattu. Une telle banquette est divulguée dans le document DE 10 2013 003788.

Parmi ces banquettes, certaines possèdent un dossier se divisant en trois parties, une partie centrale qui va servir d'accoudoir lorsque la banquette se transforme en deux sièges confortables, et deux parties latérales encadrant ladite partie centrale et pouvant elles aussi pivoter vers l'avant, pour se retrouver dans une position pour laquelle elles s'étendent parallèlement à l'assise de ladite banquette. Or, pour de telles banquettes se pose le problème de la mise en place d'une ceinture de sécurité fiable pour la partie centrale desdites banquettes, en raison principalement de la configuration desdites banquettes.

Une banquette de véhicule selon l'invention possède un dossier en trois parties inclinables indépendamment les unes des autres, et dont la géométrie particulière permet une mise en oeuvre efficace de la ceinture de sécurité pour la partie centrale de ladite banquette.

L'invention a pour objet une banquette de véhicule trois places comprenant une assise et un dossier se divisant en une partie centrale et en deux parties latérales encadrant ladite partie centrale, lesdites trois parties étant inclinables de façon indépendante pour passer chacune d'une position fonctionnelle à une position déployée pour laquelle elle s'étend parallèlement à ladite assise.

Selon l'invention les trois parties présentent des largeurs différentes suivant un axe longitudinal de la banquette, l'une des deux parties latérales étant plus large que chacune des deux autres parties pour supporter un enrouleur d'une ceinture de sécurité destinée à la place centrale de la banquette. Il est supposé qu'une banquette selon l'invention possède une longueur constante qui est identique à celle des banquettes convertibles existantes, et qu'un élargissement de l'une des deux parties latérales entraine fatalement une modification d'au moins l'une des deux autres parties du dossier de la banquette. Le principe d'une banquette selon l'invention est de posséder une partie latérale de dossier qui a été élargie pour permettre la fixation de l'enrouleur de la ceinture de sécurité destinée à sécuriser une personne qui serait assise dans la partie centrale de la banquette. Le fait que les trois parties du dossier soient inclinables indépendamment les unes des autres, signifie que le pivotement de l'une desdites parties est sans conséquence sur le pivotement des deux autres parties. Il est à noter que si la banquette était placée dans un véhicule, un axe longitudinal de ladite banquette s'étendrait parallèlement à un axe transversal Y dudit véhicule.

Selon une caractéristique possible de l'invention, l'enrouleur est fixé dans une zone supérieure et arrière de la partie latérale élargie. En effet, il est supposé que la partie élargie possède une face arrière et une face avant contre laquelle est destiné à venir en appui le dos d'une personne qui serait assise sur la banquette au niveau de ladite partie élargie. L'enrouleur est fixé à la face arrière pour ne pas interférer avec la face avant et empêcher ladite personne d'être confortablement assise. Si la banquette était placée dans un véhicule, les notions d'avant et d'arrière sont à considérer suivant un axe longitudinal X du véhicule.

Selon une caractéristique possible de l'invention, la zone supérieure est contiguë à la partie centrale du dossier de la banquette. Autrement dit, l'enrouleur vient tangenter un bord vertical de la partie latérale élargie sur laquelle il est fixé, ledit bord étant situé en regard de la partie centrale du dossier. De cette manière, en plaçant l'enrouleur proche de la partie centrale du dossier, il n'est pas nécessaire de déployer une grande longueur de ceinture de sécurité destinée à l'emplacement central de la banquette.

Selon une caractéristique possible de l'invention, la largeur de la partie centrale a été augmentée tout en demeurant inférieure à la largeur de la partie latérale de plus faible largeur. Nous restons dans l'hypothèse que la longueur de la banquette demeure constante par rapport à celle d'une banquette existante. La partie centrale étant élargie, elle va permettre de supporter, lorsqu'elle est dans la position déployée, des objets de grandes dimensions tels que par exemple des tablettes électroniques ou des ordinateurs portables. L'élargissement de la partie centrale est rendu possible grâce à la réduction de la largeur de l'une des deux parties latérales.

Selon une caractéristique possible de l'invention, dans la position déployée, la partie centrale présente une face supérieure s'étendant parallèlement à l'assise, ladite face intégrant des éléments de support d'au moins un objet électronique. Ces éléments de support peuvent par exemple être constitués par un volet pivotant, une béquille déployable, une tablette support monobloc ou déployable, un évidement, etc., ou une combinaison de certains de ces éléments.

Selon une caractéristique possible de l'invention, la face supérieure intègre un porte-gobelets. Ce porte-gobelet peut soit être fixe, soit être déployable sur la partie centrale. Avantageusement, ce porte-gobelet comprend au moins un logement cylindrique dont le diamètre est compatible avec celui d'un verre, d'une canette ou d'une bouteille.

Selon une caractéristique possible de l'invention, le porte-gobelets est réalisé en deux parties montées chacune pivotantes autour d'un axe vertical pour passer d'une position rangée dans l'accoudoir à une position déployée pour laquelle elles saillent à l'avant de l'accoudoir. De cette manière, lorsque la banquette est dans une configuration correspondant à deux sièges confortables, chaque individu assis sur l'un desdits sièges peut, à sa convenance, déployer la partie du porte-gobelets qui lui est associée sans se préoccuper de l'autre partie dudit porte-gobelets.

Selon une caractéristique possible de l'invention, chacune des deux parties du porte-gobelets présente une rainure, de sorte que les rainures de ces deux parties se retrouvent coaxiales et dans la continuité l'une de l'autre, lorsque lesdites parties sont dans la position déployée. Lorsque les rainures sont alignées l'une sur l'autre, elles forment une rainure résultante rectiligne, qui est continue ou discontinue, et qui présente une longueur résultante accrue permettant de maintenir un objet pouvant par exemple être une tablette électronique, un ordinateur portable ou un smartphone.

Selon une caractéristique possible de l'invention, la partie centrale du dossier est prolongée par un appuie-tête et dans la position déployée ledit appuie-tête constitue un élément de support complémentaire. Cet élément de support complémentaire peut, soit constituer une zone support autonome, apte à supporter à elle seule d'autres objets, soit contribuer à élargir la zone support de l'accoudoir pour stocker des objets de plus grandes dimensions.

Selon une caractéristique possible de l'invention, la face supérieure présente au moins un espace de rangement. Avantageusement, cet espace de rangement comprend un seul évidement de grande dimension ou plusieurs évidements de plus petite dimension. Cet espace de rangement peut également être clôturé par un volet mobile apte à passer d'une position de fermeture à une position d'ouverture, soit par coulissement, soit par rotation soit par une combinaison de ces deux mouvements.

Une banquette selon l'invention présente l'avantage de présenter une grande flexibilité à travers le pivotement séparé des trois parties constituant son dossier, tout en permettant de mettre en oeuvre une ceinture de sécurité efficace pour l'emplacement central de ladite banquette. De plus, cette mise en oeuvre est réalisée au moyen d'un dimensionnement judicieux des trois parties du dossier, sans nuire au confort des personnes qui seraient assises ladite banquette. Une banquette selon l'invention, présente enfin l'avantage de pouvoir comprendre une partie centrale de dossier élargie grâce à ce dimensionnement singulier, permettant de supporter des objets de grandes dimensions, tels que par exemple des tablettes électroniques, des ordinateurs portables ou des smartphones

On donne ci-après, une description détaillée d'un mode de réalisation préféré d'une banquette selon l'invention en se référant aux figures suivantes :
[Fig. 1] est une vue en perspective d'une banquette selon l'état de la technique,
[Fig. 2] est une vue de derrière d'une banquette selon l'état de la technique, l'élément de dossier central ayant pivoté vers l'avant,
[Fig. 3] est une vue de face de la structure d'une banquette selon l'invention,
[Fig. 4] est une vue en perspective d'une banquette selon l'invention, l'élément de dossier pivotant étant dans la position fonctionnelle,
[Fig. 5] est une vue en perspective d'une banquette selon l'invention, l'élément de dossier pivotant étant dans la position rabattue.

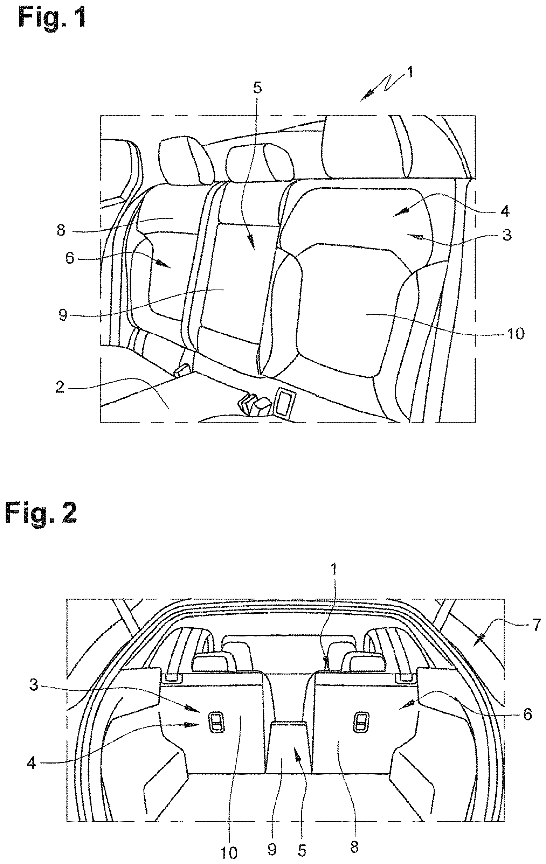

En se référant aux figures 1 et 2, une banquette 1 selon l'état de la technique comprend une assise 2 et un dossier 3, ladite banquette 1 proposant trois places 4, 5, 6 prévues pour accueillir trois personnes. L'une 5 des trois places est en position centrale et les deux autres 4, 6 sont dans des positions latérales et encadrent la place centrale 5. La banquette 1 est montée dans un véhicule 7 de sorte que les trois places 4, 5, 6 s'étendent selon un axe transversal Y du véhicule 7. Le dossier 3 de cette banquette 1 comporte trois parties 8, 9, 10, dont l'une 9 en position centrale définit un élément de dossier pivotant, et dont les deux autres 8, 10 sont latérales et encadrent la partie centrale 9. Ces deux parties latérales 8, 10 de dossier sont fixes et la partie centrale 9 est apte à pivoter vers l'avant entre une position fonctionnelle comme illustré à la figure 1 et pour laquelle elle est alignée sur les parties latérales fixes 8, 10, et une position rabattue pour laquelle elle s'étend parallèlement à l'assise 2. Dans la position rabattue, la partie centrale 9 s'étend au-dessus de l'assise 2 et forme un accoudoir séparant deux sièges latéraux, composés chacun par l'assise 2 de la banquette 1 et par une partie latérale fixe 8, 10 du dossier 3. De cette manière, la banquette à trois places 4, 5, 6 peut se transformer en deux sièges latéraux confortables, par un simple pivotement vers l'avant de la partie centrale 9 du dossier 3, qui va alors constituer un accoudoir commun pour lesdits deux sièges latéraux.

Pour cette configuration de banquette 1 existante, les largeurs des dossiers 8, 10 des deux sièges latéraux qui sont constitués par les deux parties latérales fixes 8, 10 du dossier 3 de l'assise 2, sont égales et sont nettement supérieures à la largeur de la partie centrale 9 pivotante dudit dossier 3. Il est à noter que la largeur de la partie centrale 9 et des deux parties latérales fixes 8, 10 sont leur dimension considérée selon un axe longitudinal de la banquette 1, c'est-à-dire selon un axe transversal Y du véhicule si la banquette 1 était placée dans celui-ci. Il en résulte que dans la position rabattue, la partie centrale 9 pivotante constitue un accoudoir de faible largeur, sur lequel il est difficile voire impossible de placer des objets ayant une certaine dimension, tels que par exemple un ordinateur, une tablette électronique ou un smartphone.

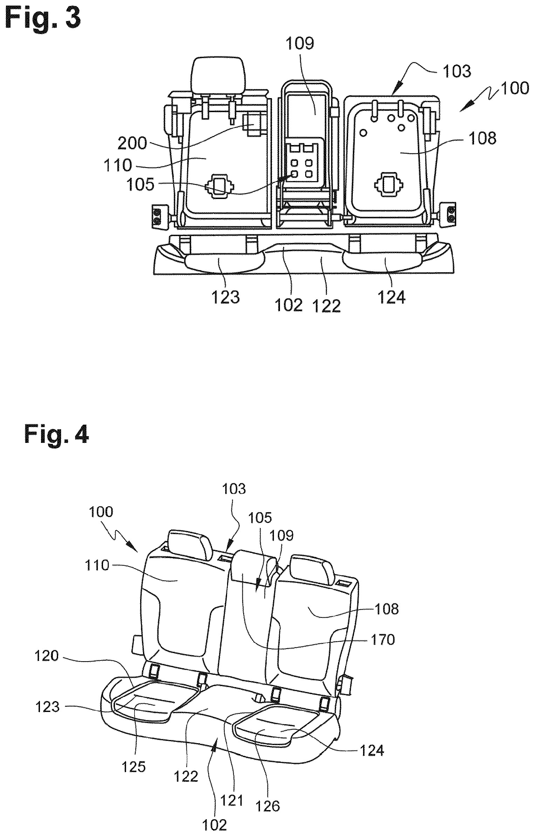

En se référant aux figures 3, 4 et 5, une banquette 100 selon l'invention, comprend une assise 102 et un dossier 103 possédant une partie centrale 109 pivotante encadrée par deux parties latérales 108, 110 également pivotantes. De cette manière, chacune de ces trois parties 108, 109, 110 peut pivoter de façon indépendante pour passer d'une position fonctionnelle à une position déployée pour laquelle elle s'étend parallèlement à l'assise 102. Ainsi, le pivotement de l'une de ces trois parties 108, 109, 109 est sans influence sur le pivotement des deux autres parties.

Afin de permettre à la place centrale 105 de la banquette 100 de bénéficier d'une ceinture de sécurité efficace malgré la présence des deux parties latérales 108, 110 pivotantes du dossier 103, ladite banquette 100 a été conçue de sorte que les largeurs desdites trois parties 108, 109, 110 soient différentes. En effet, la largeur d'une partie latérale 110 a été augmentée pour permettre la fixation d'un enrouleur 200 destiné à faire partie de la ceinture de sécurité de la place centrale 105. Afin de maintenir la longueur totale de la banquette 100 constante, l'augmentation de la largeur de l'une des deux parties latérales 108, 110 entraine une réduction de la largeur de l'autre partie latérale 108, 109, qui demeure toutefois supérieure à la largeur de la partie centrale 109. Au sein d'une banquette 100 selon l'invention, par ordre de largeur décroissante nous trouvons une partie latérale 110 du dossier 103, l'autre partie latérale 108 dudit dossier 103 et enfin la partie centrale 109.

En se référant à la figure 3, l'enrouleur 200 est fixé dans une zone supérieure de la partie latérale 110 dont la largeur a été augmentée, ladite zone étant contiguë à la partie centrale 109.

En diminuant la largeur de l'une 108 des deux parties latérales, il a été possible d'augmenter légèrement la largeur de la partie centrale 109, afin notamment de pouvoir supporter des objets de taille importante tels que par exemple un ordinateur portable, une tablette électronique ou un smartphone.

En se référant à la figure 4, l'assise 102 de la banquette 100 demeure identique à l'assise 2 d'une banquette 1 de l'état de la technique. Schématiquement, cette assise 102 comprend deux évidements latéraux 120, 121 séparés par une pièce de liaison 122 légèrement bombée et saillant au-dessus desdits évidements 120, 121. Chaque évidement 120, 121 est comblé par une assise secondaire 123, 124 présentant chacune une face supérieure horizontale 125, 126, lesdites deux faces supérieures 125, 126 étant situées à la même altitude et étant dans la parfaite continuité l'une de l'autre. Il est à préciser que la pièce de liaison 122 saille au-dessus des deux faces supérieures 125, 126 des deux assises secondaires 123, 124. Lorsque la partie centrale pivotant 109 est rabattue vers l'avant pour former un accoudoir séparant les deux sièges latéraux, les deux assises secondaires 123, 124 représentent chacune l'assise de l'un desdits deux sièges latéraux.

De cette manière, lorsque la banquette 100 est dans la configuration pour laquelle elle définit deux sièges latéraux séparés par l'accoudoir 109, les deux occupants du véhicule qui seraient assis sur lesdits deux sièges latéraux, occuperaient exactement les mêmes positions que celles qu'ils occuperaient sur l'assise 3 d'une banquette 1 de l'état de la technique. L'un bénéficierait d'un dossier 110 de largeur augmentée et l'autre d'un dossier 108 de largeur réduite, sans pour autant pâtir d'un manque de confort, car le dossier 108 de largeur réduite couvre amplement la largeur du dos de l'occupant qui serait assis à l'emplacement de la banquette 100 correspondant à la partie 108 de largeur réduite.

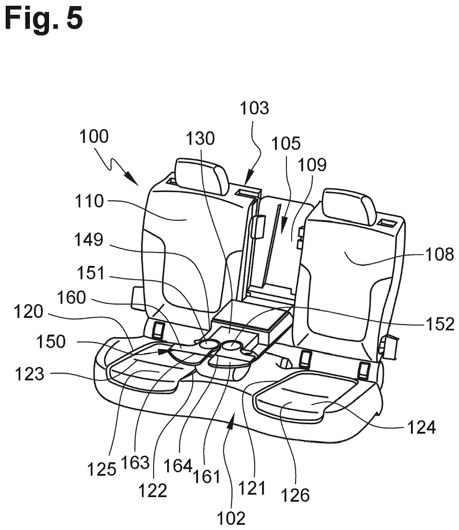

En se référant, à la figure 5, lorsque la partie centrale pivotante 109 est dans une position rabattue au-dessus de la pièce de liaison bombée 122 de l'assise 102, elle forme un accoudoir possédant une face supérieure 130 s'étendant parallèlement à l'assise 102. Cette face supérieure 130 est préférentiellement plane et peut, soit directement supporter un objet de taille importante comme par exemple un ordinateur, une tablette électronique ou un smartphone, soit mettre en oeuvre des moyens de support de ce type d'objets. Ces moyens peuvent par exemple être constitués par un volet pivotant, par une béquille de soutien déployable, par une tablette support fixe ou déployable, par un évidement, etc.

En se référant à la figure 5, une zone avant 149 de l'accoudoir 109 peut également être équipée d'un porte-gobelet 150 réalisé en deux parties 160, 161, montées chacune pivotantes autour d'un axe vertical pour passer d'une position rangée dans l'accoudoir 109 à une position déployée pour laquelle elles saillent à l'avant de l'accoudoir 109. Les deux partie 160, 161 du porte-gobelets 150 peuvent être mises en rotation autour de leur axe de rotation indépendamment l'une de l'autre. Autrement dit le positionnement de l'une des deux parties 160, 161 du porte-gobelets est sans influence sur le positionnement de l'autre partie 160, 161.

Chacune des deux parties 160, 161 du porte-gobelets 150 présente une rainure 163, 164 de sorte que les rainures 163, 164 de ces deux parties 160, 161 se retrouvent coaxiales et dans la continuité l'une de l'autre, lorsque lesdites parties 163, 164 sont dans la position déployée à l'avant de l'accoudoir 109. Lorsque les rainures 163, 164 sont alignées l'une sur l'autre, elles forment une rainure résultante qui est continue ou discontinue, et qui présente une longueur accrue permettant de maintenir un objet de grande dimension, pouvant par exemple être une tablette électronique, un ordinateur portable ou un smartphone.

Chacune des parties 160, 161 du porte-gobelets comprend un évidement 151, 152 dont le diamètre est compatible avec la réception d'un verre, d'une canette ou d'une bouteille. Le porte-gobelet 150 est préférentiellement solidarisé à la face supérieure 130 de l'accoudoir 109.

La partie centrale pivotante 109 peut être prolongée par un appuie-tête 170. Lorsque ladite partie centrale 109 est dans la position rabattue, cet appuie-tête 170 peut constituer un espace de rangement supplémentaire situé dans le prolongement de l'accoudoir 109, à l'avant de celui-ci. Il peut également contribuer à agrandir l'espace de rangement constitué par la face supérieure 130 de l'accoudoir 109 et ainsi accroitre la surface destinée à supporter un objet de grande taille.

## Revendications

1. Banquette (1, 100) de véhicule trois places comprenant une assise (2, 102) et un dossier (3, 103) se divisant en une partie centrale (109) et en deux parties latérales (108, 110) encadrant ladite partie centrale (109), lesdites trois parties (108, 109, 110) étant inclinables de façon indépendante pour passer chacune d'une position fonctionnelle à une position déployée pour laquelle elle s'étend parallèlement à ladite assise (2, 102), **caractérisée en ce que** les trois parties (108, 109, 110) présentent des largeurs différentes suivant un axe longitudinal de la banquette (100), et **en ce que** l'une (110) des deux parties latérales est plus large que chacune des deux autres parties (108, 109) pour supporter un enrouleur (200) d'une ceinture de sécurité destinée à la place centrale (105) de la banquette (100).

2. Banquette de véhicule selon la revendication 1, **caractérisée en ce que** l'enrouleur (200) est fixé dans une zone supérieure et arrière de la partie latérale élargie (110).

3. Banquette de véhicule selon la revendication 2, **caractérisée en ce que** la zone supérieure est contiguë à la partie centrale (109) du dossier (103) de la banquette (100).

4. Banquette de véhicule selon l'une quelconque des revendications 1 à 3, **caractérisée en ce que** la largeur de la partie centrale (109) a été augmentée tout en demeurant inférieure à la largeur de la partie latérale (108) de plus faible largeur.

5. Banquette de véhicule selon l'une quelconque des revendications 1 à 4, **caractérisée en ce que** dans la position déployée, la partie centrale (109) présente une face supérieure (130) s'étendant parallèlement à l'assise (102), ladite face (130) intégrant des éléments de support d'au moins un objet électronique.

6. Banquette de véhicule selon la revendication 5, **caractérisée en ce que** la face supérieure (130) intègre un porte-gobelets (150).

7. Banquette de véhicule selon la revendication 6, **caractérisé en ce que** le porte-gobelets (150) est réalisé en deux parties (160, 161) montées chacune pivotantes autour d'un axe vertical pour passer d'une position rangée dans l'accoudoir (109) à une position déployée pour laquelle elles saillent à l'avant de l'accoudoir (109).

8. Banquette de véhicule selon la revendication 7, **caractérisée en ce que** chacune des deux parties (160, 161) du porte-gobelets (150) présente une rainure (153, 154), de sorte que les rainures (153, 154) de ces deux parties (160, 161) se retrouvent coaxiales et dans la continuité l'une de l'autre, lorsque lesdites parties (160, 161) sont dans la position déployée.

9. Banquette de véhicule selon l'une quelconque des revendications 5 à 8, **caractérisé en ce que** la partie centrale (109) du dossier est prolongée par un appuie-tête (170), et **en ce que** dans la position déployée ledit appuie-tête (170) constitue un élément de support complémentaire.

10. Banquette de véhicule selon l'une quelconque des revendications 5 à 9, **caractérisée en ce que** la face supérieure (130) présente au moins un espace de rangement.

## Patentansprüche

1. Sitzbank (1, 100) für ein Fahrzeug mit drei Plätzen, umfassend eine Sitzfläche (2, 102) und eine Rückenlehne (3, 103), die in einen Mittelteil (109) und in zwei den Mittelteil (109) einrahmende Seitenteile (108, 110) unterteilt ist, wobei die drei Teile (108, 109, 110) unabhängig voneinander neigbar sind, um jeweils aus einer Funktionsposition in eine heruntergeklappte Position, in der sie sich parallel zur Sitzfläche (2, 102) erstrecken, zu gelangen, **dadurch gekennzeichnet, dass** die drei Teile (108, 109, 110) entlang einer Längsachse der Sitzbank (100) unterschiedliche Breiten aufweisen und dass einer (110) der beiden Seitenteile breiter ist als jeder der beiden anderen Teile (108, 109), um einen Aufroller (200) eines Sicherheitsgurts, der für den mittleren Platz (105) der Sitzbank (100) bestimmt ist, zu tragen.

2. Fahrzeugsitzbank nach Anspruch 1, **dadurch gekennzeichnet, dass** der Aufroller (200) in einem oberen und hinteren Bereich des verbreiterten Seitenteils (110) befestigt ist.

3. Fahrzeugsitzbank nach Anspruch 2, **dadurch gekennzeichnet, dass** der obere Bereich an den Mittelteil (109) der Rückenlehne (103) der Sitzbank (100) angrenzt.

4. Fahrzeugsitzbank nach einem der Ansprüche 1 bis 3, **dadurch gekennzeichnet, dass** die Breite des Mittelteils (109) vergrößert wurde, aber immer noch kleiner als die Breite des Seitenteils (108) mit der geringeren Breite ist.

5. Fahrzeugsitzbank nach einem der Ansprüche 1 bis 4, **dadurch gekennzeichnet, dass** der Mittelteil (109) in der ausgeklappten Position eine Oberseite (130) aufweist, die sich parallel zur Sitzfläche (102) erstreckt, wobei die Seite (130) Elemente zum Tragen mindestens eines elektronischen Objekts enthält.

6. Fahrzeugsitzbank nach Anspruch 5, **dadurch gekennzeichnet, dass** die Oberseite (130) einen Getränkehalter (150) enthält.

7. Fahrzeugsitzbank nach Anspruch 6, **dadurch gekennzeichnet, dass** der Getränkehalter (150) aus zwei Teilen (160, 161) ausgeführt ist, die jeweils um eine vertikale Achse drehbar montiert sind, um aus einer in der Armlehne (109) verstauten Position in eine ausgeklappte Position zu gelangen, bei der sie vorn aus der Armlehne (109) herausragen.

8. Fahrzeugsitzbank nach Anspruch 7, **dadurch gekennzeichnet, dass** jeder der beiden Teile (160, 161) des Getränkehalters (150) eine Nut (153, 154) aufweist, so dass die Nuten (153, 154) dieser beiden Teile (160, 161) koaxial und in der Fortsetzung zueinander liegen, wenn sich die Teile (160, 161) in der ausgeklappten Position befinden.

9. Fahrzeugsitzbank nach einem der Ansprüche 5 bis 8, **dadurch gekennzeichnet, dass** der Mittelteil (109) der Rückenlehne durch eine Kopfstütze (170) verlängert ist und dass die Kopfstütze (170) in der heruntergeklappten Position ein zusätzliches Stützelement bildet.

10. Fahrzeugsitzbank nach einem der Ansprüche 5 bis 9, **dadurch gekennzeichnet, dass** die Oberseite (130) mindestens einen Stauraum aufweist.

## Claims

1. Vehicle bench seat (1, 100) with three places, comprising a seat pan (2, 102) and a backrest (3, 103) that is divided into a central part (109) and two lateral parts (108, 110) flanking said central part (109), said three parts (108, 109, 110) being able to be inclined independently in order to each pass from a functional position to a deployed position for which it extends parallel to said seat pan (2, 102), **characterized in that** the three parts (108, 109, 110) have different widths along a longitudinal axis of the bench seat (100), and **in that** one (110) of the two lateral parts is wider than each of the two other parts (108, 109) in order to support a retractor (200) of a seat belt intended for the central place (105) of the bench seat (100).

2. Vehicle bench seat according to Claim 1, **characterized in that** the retractor (200) is fastened in an upper and rear zone of the widened lateral part (110).

3. Vehicle bench seat according to Claim 2, **characterized in that** the upper zone is contiguous with the central part (109) of the backrest (103) of the bench seat (100).

4. Vehicle bench seat according to any one of Claims 1 to 3, **characterized in that** the width of the central part (109) has been increased while still remaining smaller than the width of the lateral part (108) of smallest width.

5. Vehicle bench seat according to any one of Claims 1 to 4, **characterized in that**, in the deployed position, the central part (109) has an upper face (130) extending parallel to the seat pan (102), said face (130) incorporating elements for supporting at least one electronic object.

6. Vehicle bench seat according to Claim 5, **characterized in that** the upper face (130) incorporates a cup holder (150).

7. Vehicle bench seat according to Claim 6, **characterized in that** the cup holder (150) is produced in two parts (160, 161) which are each mounted so as to be pivotable about a vertical axis in order to pass from a position stored in the armrest (109) to a deployed position for which they protrude at the front of the armrest (109).

8. Vehicle bench seat according to Claim 7, **characterized in that** each of the two parts (160, 161) of the cup holder (150) has a groove (153, 154), such that the grooves (153, 154) of these two parts (160, 161) are coaxial and in the continuation of one another when said parts (160, 161) are in the deployed position.

9. Vehicle bench seat according to any one of Claims 5 to 8, **characterized in that** the central part (109) of the backrest is extended by a headrest (170), and **in that**, in the deployed position, said headrest (170) constitutes an additional support element.

10. Vehicle bench seat according to any one of Claims 5 to 9, **characterized in that** the upper face (130) has at least one storage space.
